# EUROPEAN PATENT APPLICATION

(11) **EP 4 608 012 A1**
(43) Date of publication of application: **27.08.2025**
(21) Application number: 24738791.3
(22) Date of filing: 05.01.2024
(51) Int. Cl.: H04W 36/08, H04W 36/00, H04W 36/18, H04W 36/38, H04W 84/04

(54) **METHOD FOR UPDATING RAN NOTIFICATION AREA FOR COMBINED MOBILE BACKHAUL AND ACCESS HALL SYSTEM IN NEXT GENERATION TELECOMMUNICATIONS SYSTEM**

(30) Priority: 05.01.2023 KR 20230001713
(71) Applicant: Samsung Electronics Co., Ltd., Suwon-si, Gyeonggi-do 16677 (KR)
(72) Inventor: HWANG, June, Suwon-si, Gyeonggi-do 16677 (KR)
(74) Representative: Gulde & Partner
(86) International application number: PCT/KR2024/095015
(87) International publication number: WO 2024/147723

(57) **Abstract**

The disclosure relates to a 5G or 6G communication system for supporting a higher data transmission rate.

According to one embodiment of the disclosure, it is possible to reduce conflicts when updating a radio access network (RAN) notification area between terminals.

## Description

### [Technical Field]

The disclosure relates to operations of a UE and a network in a mobile communication system. Specifically, the disclosure relates to a method of updating a radio access network (RAN) notification area by the UE when a cell of a backhual and access hole combination system node performs migration.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As described above, it is possible to provide various services according to the development of the mobile communication system, and thus a method of effectively providing the services is needed.

### [Disclosure]

### [Technical Problem]

The disclosure proposes a method of solving the problem that an update procedure may be delayed due to conflicts between uplink radio resources because RAN notification area updates may occur simultaneously for multiple UEs during migration of a backhaul and access hole combination node.

### [Technical Solution]

According to an embodiment of the disclosure, a method performed by a terminal in a wireless communication system includes identifying that a cell for which cell reselection has been performed is a mobile integrated access/backhaul (mIAB) cell, based on the cell reselection, identifying whether an uplink (UL) grant for a radio access network (RAN)-based notification area update (RNAU) is stored, and transmitting a radio resource control (RRC) resume request message including information making a request for the UL grant to the mIAB cell when the UL grant for the RNAU is not stored.

According to another embodiment of the disclosure, a terminal in a wireless communication system includes a transceiver, and a controller configured to perform control to identify that a cell for which cell reselection has been performed is a mobile integrated access/backhaul (mIAB) cell, based on the cell reselection, identify whether an uplink (UL) grant for a radio access network (RAN)-based notification area update (RNAU) is stored, and transmit, through the transceiver, a radio resource control (RRC) resume request message including information making a request for the UL grant to the mIAB cell when the UL grant for the RNAU is not stored.

### [Advantageous Effects]

According to an embodiment of the disclosure, it is possible to reduce conflicts during a RAN notification area update between UEs.

### [Description of Drawings]

FIG. 1 is a diagram illustrating the structure of a general LTE system.
FIG. 2 is a diagram illustrating a wireless protocol structure of the general LTE system.
FIG. 3 is a diagram illustrating a structure of a next-generation mobile communication system according to an embodiment of the disclosure.
FIG. 4 is a diagram illustrating a structure of a wireless protocol in the next-generation mobile communication system according to an embodiment of the disclosure.
FIG. 5 is a block diagram illustrating an internal structure of the UE according to an embodiment of the disclosure.
FIG. 6 is a block diagram illustrating a configuration of an NR BS according to an embodiment of the disclosure.
FIG. 7 is a sequence diagram illustrating a problem situation that may generally occur.
FIG. 8 is a sequence diagram illustrating a method by which the UE performs cell reselection from a stationary cell to mIAB cell 1 in an embodiment according to the disclosure.
FIG. 9 is a sequence diagram illustrating a method by which the UE performs cell reselection from mIAB cell 1 to mIAB cell 2 in an embodiment according to the disclosure.
FIG. 10 is a flowchart illustrating an operation of the UE according to an embodiment of the disclosure.

### [Mode for Disclosure]

Hereinafter, the operation principle of the disclosure will be described in detail with reference to the accompanying drawings. In the following description of the disclosure, when it is determined that detailed description for related known functions or configurations may unnecessarily obscure the subject matter of the disclosure, the detailed description will be omitted. The terms as described below are defined in consideration of the functions in the embodiments, and the meaning of the terms may vary according to the intention of a user or operator, convention, or the like. Therefore, the definitions of the terms should be made based on the contents throughout the specification.

Terms for identifying access nodes, terms referring to network entities, terms referring to messages, terms referring to interfaces between network entities, terms referring to various pieces of identification information, and the like, which are used in the following description, are exemplified for convenience of description. Accordingly, the disclosure is not limited to the following terms and other terms having the same technical meaning may be used.

Hereinafter, a base station (BS) is the entity that allocates resources to a user equipment (UE), and may be at least one of a gNode B, an eNode B, a Node B, a base station (BS), a radio access unit, a BS controller, or a node on a network. The UE may include a user equipment (UE), a mobile station (MS), a cellular phone, a smart phone, a computer, and a multimedia system capable of performing a communication function. In the disclosure, downlink (DL) refers to a wireless transmission path of a signal which the BS transmits to the UE, and uplink (UL) refers to a wireless transmission path of a signal which the UE transmits to the BS. Further, hereinafter, an LTE or LTE-A system may be described as an example, but embodiments of the disclosure can be applied to other communication systems having a similar technical background or channel form. For example, 5G mobile communication technology (5G, new radio, or NR) developed after LTE-A may be included in systems to which the embodiments of the disclosure can be applied, and the 5G below may be the concept including the conventional LTE and LTE-A, and similar other services. The disclosure can be applied to other communication systems through some modifications without departing from the scope of the disclosure on the basis of determination by those skilled in the art. It may be understood that each block of the processing flowchart illustrations and combinations of the flowchart illustrations can be implemented by computer program instructions.

These computer program instructions may be installed in a general-purpose computer, special-purpose computer, or processor of other programmable data-processing apparatus, such that the instructions which execute on the computer or the processor of other programmable data-processing apparatus generate a means for performing the functions specified in the flowchart block(s). These computer program instructions may also be stored in a computer-available or computer-readable memory that can direct a computer or other programmable data-processing apparatus in order to implement to a function in a particular manner such that the instructions stored in the computer-available or computer-readable memory produce an article of manufacture including instructions for implementing the function specified in the flowchart block(s). The computer program instructions may also be loaded onto a computer or other programmable data-processing apparatus to cause a series of operational steps to be performed on the computer or other programmable data-processing apparatus to produce a computer-implemented process such that the instructions executed on the computer or other programmable data-processing apparatus provide steps for implementing the functions specified in the flowchart block(s).

Further, each block may represent a portion of a module, a segment, or a code, which includes one or more executable instructions for implementing the specified logical function(s). It should also be noted that, in some alternative implementation examples, the functions mentioned in the blocks may occur out of the order. For example, two blocks shown in succession may, in fact, be executed substantially simultaneously, or the blocks may sometimes be executed in the reverse order, depending upon the functionality involved. The term 'unit' (or '~er') used in the embodiments refers to a software or hardware component such as a field-programmable gate array (FPGA) or an application-specific integrated circuit (ASIC), and the 'unit' (or ~`'er') may play roles. However, the 'unit' (or '~er') is not limited to software or hardware. The 'unit' (or '~er') may be configured to be present in an addressable storage medium, and may also be configured to run on one or more processors. Accordingly, for example, the 'unit' (or '~er') includes software components, object-oriented software components, components such as class components and task components, processors, functions, attributes, procedures, subroutines, segments of program code, drivers, firmware, microcode, a circuit, data, a database, data structures, tables, arrays, and parameters. Functions provided in the components and the 'units' (or '~ers') may be combined into a smaller number of components and the 'units' (or '~ers') or divided into a larger number of components and 'units' (or '~ers'). In addition, the components and the 'units' (or '~ers') may be implemented to run on one or more CPUs in a device or secure multimedia card. In embodiments, the 'units' (or '~ers') may include one or more processors.

For convenience of description, the disclosure uses terms and names defined in 5GS and NR standards, which are the standards defined by the 3^{rd}-generation partnership project (3GPP) among the conventional communication standards. However, the disclosure is not limited by the above terms and names, and may be applied equally to wireless communication networks following other standards. For example, the disclosure may be applied to 3GPP 5GS/NR (5^{th}-generation mobile communication standard).

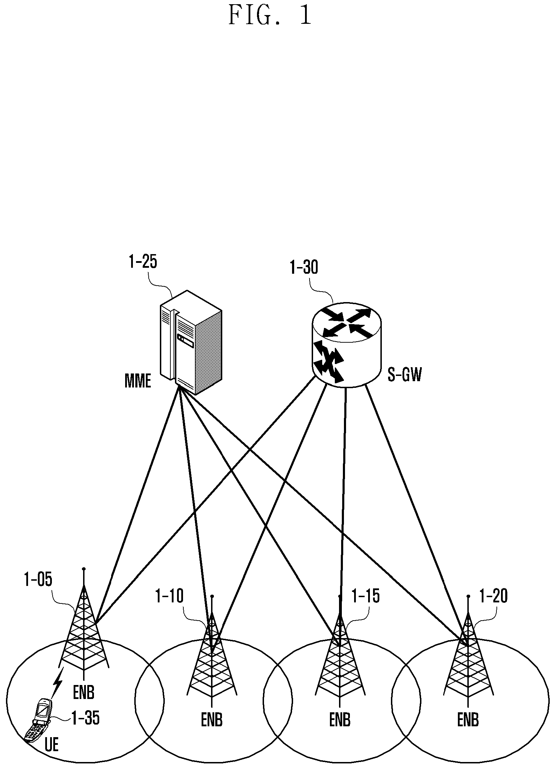

FIG. 1 is a diagram illustrating the structure of a general LTE system.

Referring to FIG. 1, as illustrated, a radio access network of the LTE system may be constituted by next-generation base stations (Evolved Node Bs (ENBs), Node Bs, or base stations) 1-05, 1-10, 1-15, and 1-20, a mobility management entity (MME) 1-25, and a serving gateway (S-GW) 1-30. A user equipment (hereinafter, referred to as a UE or a terminal) 1-35 may access an external network through the ENBs 1-05 to 1-20 and the S-GW 1-30.

In FIG. 1, the ENBs 1-05 to 1-20 may correspond to the conventional node Bs of a UMTS system. The ENBs 1-05 to 1-20 are connected to the UE 1-35 through radio channels, and may play a more complicated role than the conventional node B. In the LTE system, all user traffic including a real-time service such as a voice over IP (VoIP) through an Internet protocol may be served through a shared channel. Accordingly, a device for collecting and scheduling status information such as buffer statuses, available transmission power statuses, and channel statuses of UEs is needed, which is served by the ENBs 1-05 to 1-20. One ENB may generally control a plurality of cells. For example, in order to implement a transmission rate of 100 Mbps, the LTE system may use, for example, orthogonal frequency division multiplexing (OFDM) as the radio access technology in a bandwidth of 20 MHz. Further, an adaptive modulation and coding (AMC) scheme of determining a modulation scheme and a channel coding rate in accordance with the channel status of the UE may be applied. The S-GW 1-30 is a device that provides a data bearer and may generate or remove a data bearer according to the control of the MME 1-25. The MME is a device that serves to perform various control functions as well as a function of managing mobility of the UE and may be connected to a plurality of ENBs.

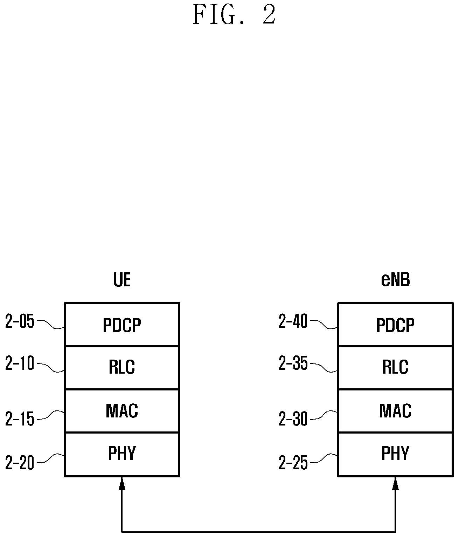

FIG. 2 is a diagram illustrating a wireless protocol structure of the general LTE system.

Referring to FIG. 2, the wireless protocol of the LTE system may be constituted by packet data convergence protocols (PDCPs) 2-05 and 2-40, radio link controls (RLCs) 2-10 and 2-35, medium access controls (MACs) 2-15 and 2-30, respectively, in UE and the ENB. The PDCP may perform an operation such as IP header compression/restoration. Main functions of the PDCP may be summarized below.
- Header compression and decompression function (Header compression and decompression: ROHC only)
- User data transfer function (Transfer of user data)
- Sequential delivery function (In-sequence delivery of upper layer PDUs at PDCP re-establishment procedure for RLC AM)
- Sequence re-arrangement function (For split bearers in DC (only support for RLC AM): PDCP PDU routing for transmission and PDCP PDU reordering for reception)
- Duplicate detection function (Duplicate detection of lower layer SDUs at PDCP re-establishment procedure for RLC AM)
- Retransmission function (Retransmission of PDCP SDUs at handover and, for split bearers in DC, of PDCP PDUs at PDCP data-recovery procedure, for RLC AM)
- Ciphering and deciphering function (Ciphering and deciphering)
- Timer-based SDU deletion function (Timer-based SDU discard in uplink)

The radio link controls (RLCs) 2-10 and 2-35 may perform an ARQ operation and the like by reconfiguring a PDCP packet data unit (PDU) to have the proper size. Main functions of the RLC may be summarized below.
- Data transfer function (Transfer of upper layer PDUs)
- ARQ function (Error Correction through ARQ (only for AM data transfer))
- Concatenation, segmentation, and reassembly function (Concatenation, segmentation, and reassembly of RLC SDUs (only for UM and AM data transfer))
- Re-segmentation function (Re-segmentation of RLC data PDUs (only for AM data transfer))
- Reordering function (Reordering of RLC data PDUs (only for UM and AM data transfer)
- Duplication detection function (only for UM and AM data transfer)
- Error detection function (Protocol error detection (only for AM data transfer))
- RLC SDU deletion function (RLC SDU discard (only for UM and AM data transfer))
- RLC re-establishment function (RLC re-establishment)

The MACs 2-15 and 2-30 are connected with various RLC layer entities constructed in one UE, and perform an operation for multiplexing RLC PDUs to the MAC PDU and de-multiplexing the RLC PDUs from the MAC PDU. Main functions of the MAC may be summarized below.
- Mapping function (Mapping between logical channels and transport channels)
- Multiplexing and demultiplexing function (Multiplexing/demultiplexing of MAC SDUs belonging to one or different logical channels into/from Transport Blocks (TB) delivered to/from the physical layer on transport channels)
- Scheduling information report function (Scheduling information reporting)
- HARQ function (Error correction through HARQ)
- Function of controlling priority between logical channels (Priority handling between logical channels of one UE)
- Function of controlling priority between UEs (Priority handling between UEs by means of dynamic scheduling)
- MBMS service identification function (MBMS service identification)
- Transport format selection function (Transport format selection)
- Padding function (Padding)

The PHY layers 2-20 and 2-25 may perform an operation for channel-coding and modulating higher-layer data to generate an OFDM symbol and transmitting the OFDM symbol through a radio channel or demodulating and channel-decoding the OFDM symbol received through a radio channel and delivering the demodulated and channel-decoded OFDM symbol to a higher layer.

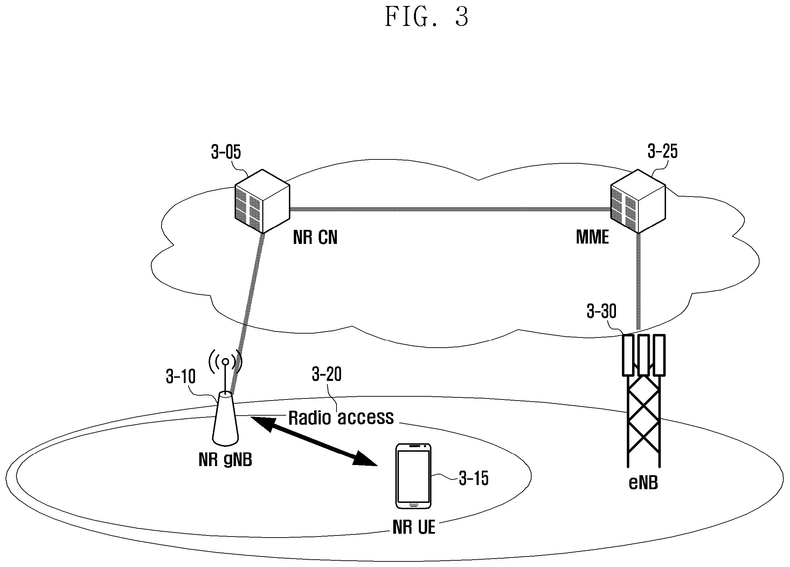

FIG. 3 is a diagram illustrating the structure of a next-generation mobile communication system according to an embodiment of the disclosure.

Referring to FIG. 3, a radio access network of a next-generation mobile communication system (hereinafter, referred to as NR or 5g) may be constituted by a next-generation base station (new radio Node B, hereinafter, referred to as NR gNB, or NR base station) 3-10 and a next-generation radio core network (new radio core network or NR CN) 3-05. A next-generation radio user terminal (new radio user equipment, NR UE, or NR terminal) 3-15 may access an external network through the NR gNB 3-10 or the NR CN 3-05.

In FIG. 3, the NR gNB 3-10 may correspond to an evolved Node B (eNB) in a conventional LTE system. The NR gNB may be connected to the NR UE 3-15 through a radio channel and may provide better service than the conventional node B. In the next-generation mobile communication system, all user traffic may be served through a shared channel. Accordingly, a device for collecting and scheduling status information such as buffer statuses, available transmission power statuses, and channel statuses of UEs is needed, which may be served by the NR NB 3-10. One NR gNB may control a plurality of cells. In the next-generation mobile communication system, in order to implement super-high data transmission compared to general LTE, a bandwidth higher than or equal to the normal maximum bandwidth may be applied. Further, a beamforming technology may be additionally grafted onto the orthogonal frequency division multiplexing (OFDM) as a radio access technology. In addition, an adaptive modulation and coding (AMC) scheme of determining a modulation scheme and a channel coding rate in correspondence to a channel status of the NR UE may be applied. The NR CN 3-05 may perform a function of supporting mobility, configuring a bearer, configuring QoS, and the like. The NR CN is a device that performs various control functions as well as a function of managing mobility for the UE, and may be connected to a plurality of NR gNBs. Further, the next-generation mobile communication system may interwork with the LTE system, and the NR CN may be connected to an MME 3-25 through a network interface. The MME may be connected to an eNB 3-30 that is the LTE BS.

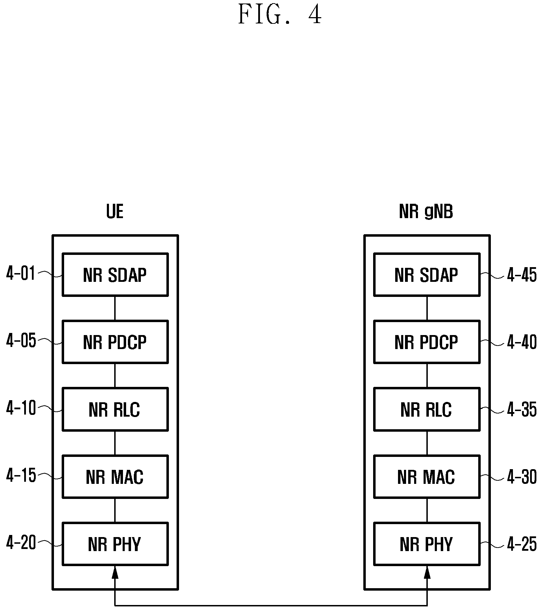

FIG. 4 is a diagram illustrating the structure of a wireless protocol in the next-generation mobile communication system according to an embodiment of the disclosure.

Referring to FIG. 4, the wireless protocol of the next-generation mobile communication system is constituted by NR service data adaptation protocols (SDAPs) 4-01 and 4-45, NR PDCPs 4-05 and 4-40, NR RLCs 4-10 and 4-35, NR MACs 4-15 and 4-30, and NR PHYs 4-20 and 4-25 in the UE and the NR gNB.

Main functions of the NR SDAPs 4-01 and 4-45 may include some of the following functions.
- User data transfer function (transfer of user-plane data)
- Function of mapping QoS flow and a data bearer for uplink and downlink (mapping between a QoS flow and a DRB for both DL and UL)
- Function of marking a QoS flow ID for uplink and downlink (marking QoS flow ID in both DL and UL packets)
- Function of mapping reflective QoS flow to a data bearer for uplink SDAP PDUs (reflective QoS flow to DRB mapping for the UL SDAP PDUs)

For the SDAP layer entity, the UE may receive a configuration indicating whether to use the header of the SDAP layer entity or the function of the SDAP layer entity for each PDCP layer entity, each bearer, or each logical channel through a radio resource control (RRC) message. When the SDAP header is configured, the UE may indicate an update or a reconfiguration of mapping information for uplink and downlink QoS flow and the data bearer through a non-access stratum (NAS) quality of service (QoS) reflective configuration 1-bit indicator (NAS reflective QoS) and an access stratum (AS) QoS reflective configuration 1-bit indicator (AS reflective QoS) of the SDAP header. The SDAP header may include QoS flow ID information indicating the QoS. QoS information may be used as data processing priority, scheduling information, and the like in order to support smooth service.

Main functions of the NR PDCPs 4-05 and 4-40 may include some of the following functions.
- Header compression and decompression function (Header compression and decompression: ROHC only)
- User data transfer function (Transfer of user data)
- Sequential delivery function (In-sequence delivery of upper layer PDUs)
- Non-sequential delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Ciphering and deciphering function (Ciphering and deciphering)
- Timer-based SDU deletion function (Timer-based SDU discard in uplink)

In the above-described content, the reordering function of the NR PDCP entity may be a function of sequentially reordering PDCP PDUs received by a lower layer, based on a PDCP sequence number (SN). The reordering function of the NR PDCP entity may include a function of sequentially delivering the reordered data to a higher layer, a function of directly performing delivery without consideration of the order, a function of performing reordering to record lost PDCP PDUs, a function of reporting statuses of the lost PDCP PDUs to a transmitting side, and a function of making a request for retransmitting the lost PDCP PDUs.

Main functions of the NR RLCs 4-10 and 4-35 may include some of the following functions.
- Data transfer function (Transfer of upper layer PDUs)
- Sequential delivery function (In-sequence delivery of upper layer PDUs)
- Non-sequential delivery function (Out-of-sequence delivery of upper layer PDUs)
- ARQ function (Error correction through ARQ)
- Concatenation, segmentation, and reassembly function (Concatenation, segmentation, and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU deletion function (RLC SDU discard)
- RLC re-establishment function (RLC re-establishment)

In the above-described content, the sequential delivery function (in-sequence delivery) of the NR RLC entity may be a function of sequentially delivering RLC SDUs received from a lower layer to a higher layer. When one RLC SDU is divided into a plurality of RLC SDUs and received, the sequential delivery function (in-sequence delivery) of the NR RLC entity may include a function of reassembling and then delivering the RLC SDUs.

The sequential delivery function (in-sequence delivery) of the NR RLC entity may include a function of reordering the received RLC PDUs, based on an RLC sequence number (SN) or a PDCP sequence number (SN), a function of performing reordering to record lost RLC PDUs, a function of reporting statuses of the lost RLC PDUs to a transmitting side, and a function of making a request for retransmitting the lost RLC PDUs.

The sequential delivery function (in-sequence delivery) of the NR RLC entity may include a function of, if there is a lost RLC SDU, sequentially delivering only RLC SDUs preceding the lost RLC SDU to the higher layer.

The sequential delivery function (in-sequence delivery) of the NR RLC entity may include a function of, if a predetermined timer expires even though there are lost RLC SDUs, sequentially delivering all RLC SDUs received before the timer starts to the higher layer.

The sequential delivery function (in-sequence delivery) of the NR RLC entity may include may include a function of, if a predetermined timer expires even though there are lost RLC SDUs, sequentially delivering all RLC SDUs received up to now to the higher layer.

The NR RLC entity may sequentially process RLC PDUs in the order of reception regardless of sequence numbers (out-of-sequence delivery) and deliver the RLC PDUs to the NR PDCP entity.

When receiving segments, the NR RLC entity may receive segments stored in the buffer or to be received in the future, reconfigure the segments to be one complete RLC PDU, and then deliver the RLC PDU to the NR PDCP entity.

The NR RLC layer may not include a concatenation function, and the function may be performed by the NR MAC layer, or may be replaced with a multiplexing function of the NR MAC layer.

In the above-described content, the non-sequential delivery function (out-of-sequence delivery) of the NR RLC entity may be a function of directly delivering RLC SDUs received from the lower layer to the higher layer regardless of the sequence. When one RLC SDU is divided into a plurality of RLC SDUs and received, the non-sequential delivery function (out-of-sequence delivery) of the NR RLC entity may include a function of reassembling and then delivering the RLC SDUs. The non-sequential delivery function (out-of-sequence delivery) of the NR RLC entity may include a function of storing RLC SNs or PDCP SNs of the received RLC PDUs, ordering the same, and recording lost RLC PDUs.

The NR MACs 4-15 and 4-30 may be connected to a plurality of NR RLC layer entities configured in one UE and main functions of the NR MAC may include some of the following functions.
- Mapping function (Mapping between logical channels and transport channels)
- Multiplexing and demultiplexing function (Multiplexing/demultiplexing of MAC SDUs)
- Scheduling information report function (Scheduling information reporting)
- HARQ function (Error correction through HARQ)
- Function of controlling priority between logical channels (Priority handling between logical channels of one UE)
- Function of controlling priority between UEs (Priority handling between UEs by means of dynamic scheduling)
- MBMS service identification function (MBMS service identification)
- Transport format selection function (Transport format selection)
- Padding function (Padding)

The NR PHY layers 4-20 and 4-25 may perform an operation of channel-coding and modulating higher layer data to generate an OFDM symbol and transmitting the OFDM symbol through a radio channel or demodulating and channel-decoding the OFDM symbol received through the radio channel and delivering the demodulated and channel-decoded OFDM symbol to the higher layer.

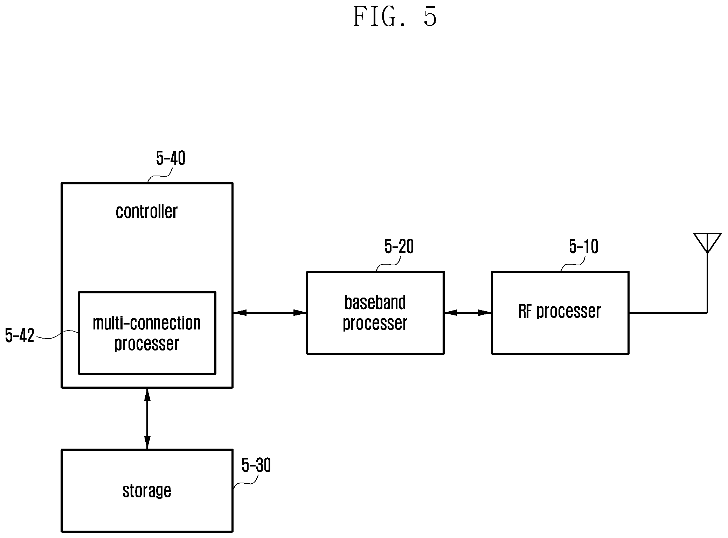

FIG. 5 is a block diagram illustrating the structure of the UE according to an embodiment of the disclosure.

Referring to the drawing, the UE may include a radio-frequency (RF) processor 5-10, a baseband processor 5-20, a storage 5-30, and a controller 5-40.

The RF processor 5-10 may perform a function of transmitting and receiving signals through a radio channel such as band conversion and amplification of a signal. The RF processor 5-10 may up-convert a baseband signal provided from the baseband processor 5-20 into an RF band signal, transmit the RF band signal through an antenna, and then down-convert the RF band signal received through the antenna into the baseband signal. For example, the RF processor 5-10 may include a transmission filter, a reception filter, an amplifier, a mixer, an oscillator, a digital-to-analog converter (DAC), an analog-to-digital converter (ADC), and the like. Although only one antenna is illustrated in the drawing, the UE may have a plurality of antennas. The RF processor 5-10 may include a plurality of RF chains. Moreover, the RF processor 5-10 may perform beamforming. For the beamforming, the RF processor 5-10 may control a phase and a size of each of the signals transmitted/received through a plurality of antennas or antenna elements. The RF processor may perform MIMO and receive multiple layers when performing the MIMO operation.

The baseband processor 5-20 may perform a function of conversion between a baseband signal and a bitstream according to a physical layer standard of the system. For example, in data transmission, the baseband processor 5-20 may encode and modulate a transmission bitstream to generate complex symbols. In data reception, the baseband processor 5-20 may reconstruct a reception bitstream through demodulating and decoding of the baseband signal provided from the RF processor 5-10. For example, in an orthogonal frequency division multiplexing (OFDM) scheme, when data is transmitted, the baseband processor 5-20 may generate complex symbols by encoding and modulating a transmission bitstream, map the complex symbols to subcarriers, and then configure OFDM symbols through an inverse fast Fourier transform (IFFT) operation and a cyclic prefix (CP) insertion. Further, when data is received, the baseband processor 5-20 may divide the baseband signal provided from the RF processor 5-10 in the unit of OFDM symbols, reconstruct the signals mapped to the subcarriers through fast Fourier transform (FFT), and then reconstruct a reception bitstream through demodulation and decoding.

The baseband processor 5-20 and the RF processor 5-10 may transmit and receive signals as described above. Accordingly, each of the baseband processor 5-20 and the RF processor 5-10 may be referred to as a transmitter, a receiver, a transceiver, or a communicator. Further, at least one of the baseband processor 5-20 and the RF processor 5-10 may include a plurality of communication modules to support a plurality of different radio access technologies. At least one of the baseband processor 5-20 and the RF processor 5-10 may include different communication modules to process signals in different frequency bands. For example, the different radio access technologies may include a wireless LAN (for example, IEEE 802.11), a cellular network (for example, LTE), and the like. Further, the different frequency bands may include a super high frequency (SHF) (for example, 2.NRHz, NRhz) band and a millimeter (mm) wave (for example, 60 GHz) band.

The storage 5-30 may store data such as a basic program, an application program, and configuration information for the operation of the UE. Particularly, the storage 5-30 may store information related to a second access node performing wireless communication through a second radio access technology. Further, the storage 5-30 may provide the stored data according to a request of the controller 5-40.

The controller 5-40 may control the overall operations of the UE. For example, the controller 5-40 may transmit and receive signals through the baseband processor 5-20 and the RF processor 5-10. Further, the controller 5-40 records data in the storage 5-40 and reads the data. To this end, the controller 5-40 may include at least one processor. For example, the controller 5-40 may include a communication processor (CP) that performs the control for communication, and an application processor (AP) that controls a higher layer such as an application.

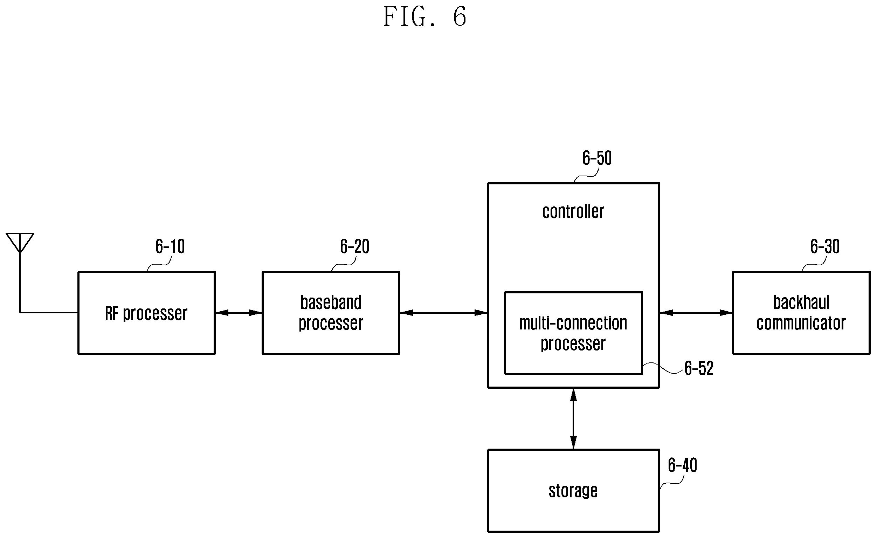

FIG. 6 is a block diagram illustrating a configuration of the NR BS according to an embodiment of the disclosure.

As illustrated in the drawing, the base station may include an RF processor 6-10, a baseband processor 6-20, a backhaul communicator 6-30, a storage 6-40, and a controller 6-50.

The RF processor 6-10 may perform a function of transmitting and receiving signals through a radio channel such as band conversion and amplification of a signal. The RF processor 6-10 may up-convert a baseband signal provided from the baseband processor 6-20 into an RF band signal, transmit the RF band signal through an antenna, and then down-convert the RF band signal received through the antenna into the baseband signal. For example, the RF processor 6-10 may include a transmission filter, a reception filter, an amplifier, a mixer, an oscillator, a DAC, an ADC, and the like. Although only one antenna is illustrated in the drawing, the first access node may have a plurality of antennas. The RF processor 6-10 may include a plurality of RF chains. The RF processor 6-10 may perform beamforming. For the beamforming, the RF processor 6-10 may control the phase and the size of each of the signals transmitted and received through a plurality of antennas or antenna elements. The RF processor may perform a downlink MIMO operation by transmitting one or more layers.

The baseband processor 6-20 may perform a function for conversion between a baseband signal and a bitstream according to the physical layer standard of the first radio access technology. For example, in data transmission, the baseband processor 6-20 may encode and modulate a transmission bitstream to generate complex symbols. In data reception, the baseband processor 6-20 may reconstruct a reception bitstream through demodulating and decoding of the baseband signal provided from the RF processor 6-10. For example, in an OFDM scheme, when data is transmitted, the baseband processor 6-20 may generate complex symbols by encoding and modulating the transmission bitstream, map the complex symbols to subcarriers, and then configure OFDM symbols through an IFFT operation and a CP insertion. In addition, when data is received, the baseband processor 6-20 may divide a baseband signal provided from the RF processor 6-10 in units of OFDM symbols, reconstruct signals mapped to subcarriers through an FFT operation, and then reconstructs a reception bitstream through demodulation and decoding. The baseband processor 6-20 and the RF processor 6-10 may transmit and receive signals as described above. Accordingly, each of the baseband processor 6-20 and the RF processor 6-10 may be referred to as a transmitter, a receiver, a transceiver, a communicator, or a wireless communicator.

The backhaul communicator 6-30 may provide an interface for communicating with other nodes within the network. The backhaul communicator 6-30 may convert a bitstream transmitted from a main BS to another node, for example, an auxiliary BS, a core network, or the like into a physical signal and may convert the physical signal received from the other node into the bitstream.

The storage 6-40 may store data such as a basic program, an application program, and configuration information for the operation of the BS. Particularly, the storage 6-40 may store information on bearers allocated to the accessed UE, a measurement result reported from the accessed UE, and the like. Further, the storage 6-40 may store information which is a reference for determining whether to provide or stop multiple connections to the UE. The storage 6-40 may provide the stored data according to a request of the controller 6-50.

The controller 6-50 may control the overall operations of the BS. For example, the controller 6-50 may transmit and receive signals through the baseband processor 6-20 and the RF processor 6-10 or the backhaul communicator 6-30. Further, the controller 6-50 records data in the storage 6-40 and reads the data. To this end, the controller 6-50 may include at least one processor.

Hereinafter, the solution proposed in the disclosure is described by the higher concept (high level description).

When an inactive UE camps on a mobile integrated access/backhaul (mIAB) cell, information indicating a random access channel (RACH)-less RAN-based notification area update (RNAU) is desired may be transmitted to the network. A donor node receiving the information may transmit a timing advance (TA) and UL grant information to the UE. Thereafter, in full migration of the mIAB node, a RNA associated with a new donor node may be changed. When information on the change is broadcasted and the UE needs the RNAU, a request for the RNAU may be made using the pre-received TA and UL grant.

The following is the operation for each step.

Prerequisites of the inactive UE for an indication to a mIAB cell:
1) The case where the UE selects or reselects a cell broadcasting a mIAB cell indicator; or
   1) The case where cell selection or reselection from a cell having no mIAB cell indicator to a cell having an indicator is performed
   2) In this case, the UE may store whether there is a mIAB cell indicator of a cell on which the UE previously camped.
2) Whether the previous camping cell is the mIAB cell is stored and, when the cell is not the mIAB cell, the prerequisites may be satisfied when a reselected cell through the next cell reselection transmits an indicator indicating the mIAB cell.

When the prerequisites are met, the UE may make a request for configuring the UL grant through the camping cell. The request process is described below.
1) If the UL grant for the RNAU has been previously configured by the mIAB cell and a TA validity condition therefor is still satisfied, a request for configuring the UL grant may be made using the corresponding UL grant.
2) In this case, even though cell reselection is performed, the UL grant information configured in the previously camping cell may not be deleted and may be maintained.
1) If the TA validity condition is not satisfied or the existing UL grant for the RNAU is not configured, the following may be performed.
1) Random access may be performed using random access (RA) configuration information provided by the corresponding mIAB cell.
2) A random access preamble may be transmitted and a RA response (RAR) may be received. The UE may acquire a TA value and UL grant information through the RAR.
1) A RRCResumeRequest message may be transmitted as Msg 3 by applying the TA value and using the UL grant.
2) The RRCResumeRequest message may include at least one of the following.
3) A RNA update indicator may be included as a cause value. In this case, as the UE camps on a new mIAB cell, the RNA update may be included as necessary. A donor CU receiving the RRCResumeRequest message may perform UE context retrieval from the last serving gNB. The donor CU may configure new RNA information in the UE.
3) As a resume identity, an I-RNTI, a short I-RNTI, or a UE ID for identifying the UE for UE context retrieval in the last serving gNB may be included.
3) resumeMAC-I is an authentication token and may be required when the gNB performs UE authentication.
3) In addition, an indicator making a request for configuring the UL grant for RACH-less RNAU may be included. The indicator may be expressed as one of cause values.
3) According to an embodiment, the indicator making a request for configuring the UL grant may be separately included without RNA update indicator.
4) In this case, a donor node receiving the indicator making a request for configuring the UL grant may perform UE context retrieval from the last serving gNB. Further/In addition, UL grant information for the RACH-less RNAU may be provided to the UE.
4) Moreover, the short I-RNTI, the I-RNTI, and/or the resumeMAC-I information may be additionally included.

A donor node receiving the RRCResumeRequest message from the UE may perform at least one of the following operations (high-level description).
1) In a target cell in the DU of mIAB, for example, a cell on which the UE camped, the corresponding UE may configure available UL grant information and transfer the same to the UE.
2) For the configured UL grant, the DU of mIAB should maintain information on the configured UL grant.
1) TA information may be provided to the UE, and the DU may store the TA information.
1) After the TA and the UL grant are provided to the UE, the TA and the UL grant may be used when the RNAU should be performed according to full migration if the mIAB node needs to perform the full migration.
1) In addition, after the TA and the UL grant information are provided to the UE, the UE may be informed of PCI and/or frequency information as redirection information when a PCI and/or a frequency of a cell operated by the mIAB are changed if the mIAB node performs the full migration.

A method by which the donor node provides UL grant resource allocation and TA information to the UE during the operation:
1) When the UE transmits a request for configuring the UL grant through the cell of the mIAB node, the network may transition the UE to a connected mode. The network may transmit the UL grant and/or the TA value to the UE or may transmit the UL grant and/or the TA value as the UE is in the inactive mode.
2) When the UE transmits the situation in the inactive state as it is, the network may configure a suspendConfig field in the RRCRelease message and transmit the RRCRelease message to the UE.
2) At least one piece of the information may be included in the suspendConfig field.
3) A full/ short I-RNTI, a ran-paging cycle, ran-notification area Info, a t380 time value, and an NCC value
3) Timing advance (TA) information to be used for message transmission by the UE when the RNAU request is made
4) As the TA information, one of a specific time value, an indicator indicating the use of the current TA value, an indicator indicating the use of a TA value of a primary timing advance group (PTAG), or an indicator indicating the use of a TA value of a secondary timing advance group (STAG) may be transmitted.
3) TA validation condition: there may be a condition related to the strength of a serving cell and a timer condition for the TA information. Only when both the condition related to the strength and the timer condition are satisfied, the TA value may be used. When the condition related to the strength and the timer condition are not satisfied, the UE may make a RNAU request after acquiring the TA value through random access.
4) Option 1 of condition related to strength: two thresholds indicating a boundary of a change in the strength of a DL signal of the corresponding serving cell: a maximum value and a minimum value of RSRP/RSRQ/RSSI values;
5) When the strength of the DL signal of the serving cell exists between the given maximum value and minimum value from a time point at which information on the two thresholds are received to a time point at which the UE wants the RNAU or a time point at which the UE wants to transmit a RNAU request message and when the UE have never left the corresponding section, it may be determined that the condition is satisfied.
4) Option 2 of condition related to strength: one value indicating a width of the change in the strength of the DL signal of the corresponding serving cell;
5) When the signal strength becomes larger or smaller by the corresponding width or more at the time point at which the UE wants to transmit the RNAU request message, based on the strength of the DL signal of the serving cell at the time point at which information on the one value indicating the width of the change in the strength of the DL signal of the corresponding serving cell is received from a base station, it may be determined that the condition is not satisfied. For example, when the strength of the DL signal of the serving cell exists between a positive width value and a negative width value, based on the DL signal of the serving cell at the time point at which the information is received, it may be determined that the condition is satisfied.
4) One of options 1 and 2 may be used. When receiving information of option 1 and/or option 2, the UE may store a measurement value of downlink pathloss reference RSRP/RSRQ/RSSI of the serving cell or a downlink pathloss reference cell. Further, during the operation of the TA timer below, the corresponding DL pathloss reference RSRP/RSRQ/RSSI may be measured, and a change in the measurement value may be monitored. As a result, it may be determined that the given TA is valid in a situation where RSRP/RSRP/RSSI as the DL pathloss reference are bound to the given two thresholds (opt 1) or one threshold (opt 2). For example, the UE may determine that the condition is satisfied.
4) TA validation timer: the longest time value in consideration of TA validation. The TA validation timer may be included in a RRCRelease with suspendConfig message.
5) When receiving information on the timer, the UE may start the timer.
5) When the timer expires, the UE may consider that the given TA value is not valid.
3) UL grant configuration information: the time/frequency resource location and resource set information of UL resources, a repetitive periodicity value of a resource pattern, a time window value in which the UL grant exists, offset information of the time from an SFN or a specific slot of the periodicity and the time window or a radio frame start time point, and UL BWP information that should be used (id or UL center frequency)

The UE receiving the message is still in the inactive state, and the UL grant resource may be used in the following cases without any random access procedure.
1) The case where the UE makes a request for configuring the UL grant to the serving cell; and
2) RRCResumeRequest may be used as the message in which case a cause may be the request for configuring the UL grant.
1) The case where all the TA valid conditions are satisfied

In the cases other than the above cases, random access resources for message transmission for a RNA update request of the UE may be separately configured in the mIAB cell as another embodiment. RACH preamble, frequency/time and UL BWP configuration information for the RNA update request may be transmitted using a MIB or a SIB in the mIAB cell. When the UE camps on the mIAB cell, the information may be stored as system information. Thereafter, when the UE determines that the RNAU should be performed and wants to transmit a RNAU request message, the UE may perform random access by using the RACH configuration to acquire the TA and the UL grant and perform the RNAU procedure.

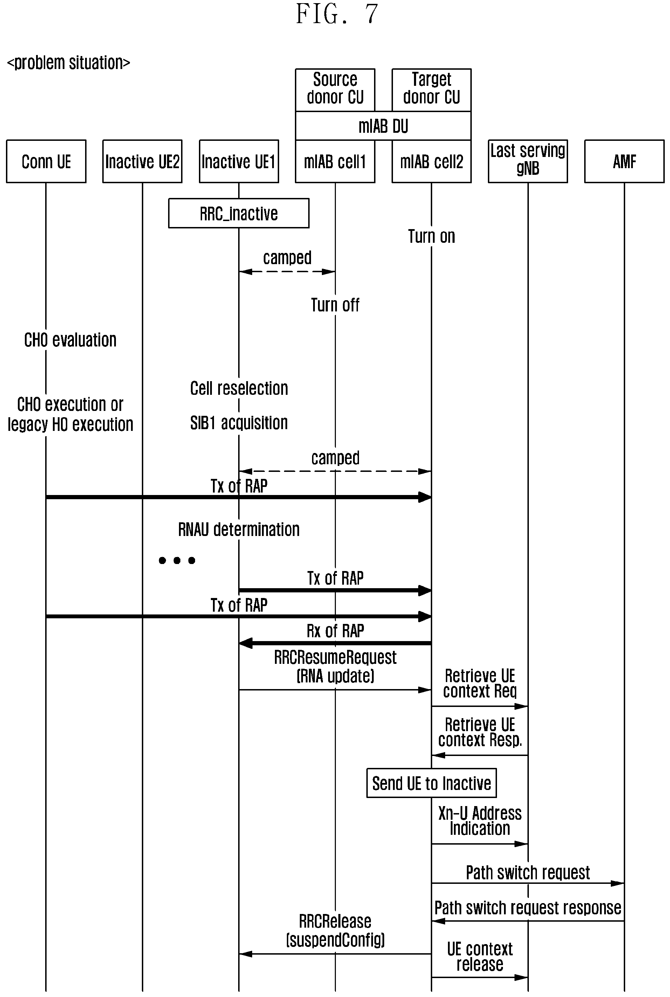

FIG. 7 is a sequence diagram illustrating a problem situation that may generally occur.

An embodiment in which inactive UEs 1 and 2 and a UE in a connected state camp on mIAB cell 1 and have a RRC connection is described. At this time, a mIAB node is associated with a source donor CU. Thereafter, by movement of the mIAB, migration to a target donor CU may be performed, and cell 1 may be turned off and cell 2 may be turned on during the migration process. At this time, cell 2 may transmit SSB and system information, based on a new NCGI and PCI. Accordingly, inactive UEs 1 and 2 may perform cell reselection, based on cell 2, and the UE in the connected state may perform conditional handover to cell 2 according to a configuration in a previous cell.

When the RNA of the target donor CU is changed and is not included in a RNA list previously configured in the inactive UE, the UE should perform the RNAU. In order to perform the RNAU, the UE may perform random access. At this time, all UEs having simultaneously camped and having performed cell reselection to cell 2 and UEs in which the conditional handover was configured among UEs in the connected mode may perform random access at the almost similar time. Accordingly, since conflicts may occur in random access time resources, a problem that only a small number of UEs succeed in random access to the network may occur. FIG. 7 illustrates the case in which only UE 1 acquires a UL grant and transmits a RRC message for an RAN update.

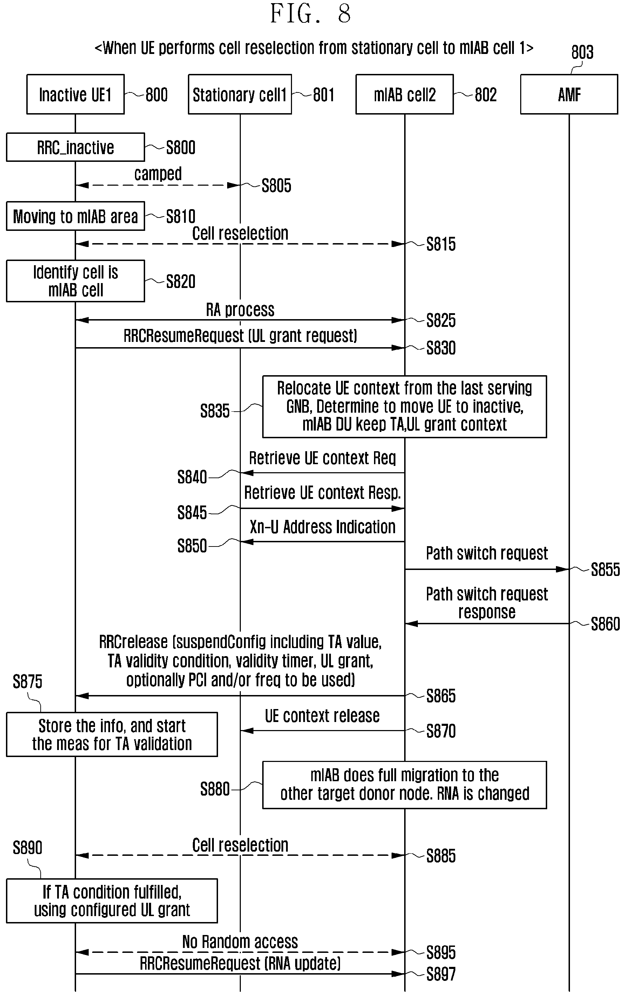

FIG. 8 is a sequence diagram illustrating a method by which the UE performs cell reselection from a stationary cell to mIAB cell 1 in an embodiment according to the disclosure.

As shown in step S800, an embodiment (of step S805) in the case where inactive UE 1 800 camps on a stationary cell 801 (for example, a cell other than the cell on the mIAB node) is disclosed. Thereafter, in step S810, inactive UE 1 800 may move to an mIAB area and perform cell reselection (in step S815) to camp on a cell 1 802. At this time, inactive UE 1 800 may acquire an mIAB indicator from cell 1 802. In step S820, inactive UE 1 800 may identify that cell 1 802 is the mIAB cell. For example, inactive UE 1 800 may receive the mIAB indicator, and include an indicator making a request for the UL grant for the RACH-less RNAU into the RRCResumeRequest message and transmit the RRCResumeRequest message. At this time, a random access procedure according to a general RACH configuration (or contention-based RACH) may be performed to cell 1 802 (steps S825 and S830).

The donor CU receiving the indicator through mIAB cell 1 802 may perform UE context retrieve from the gNB. For example, in step S835, the donor CU corresponding to mIAB cell 1 802 may relocate UE context from the gNB corresponding to the stationary cell 801. The donor CU corresponding to mIAB cell 1 802 may determine to maintain inactive UE 1 800 in the inactive mode. Further, the gNB corresponding to mIAB cell 1 802 may maintain the TA and the UL grant context.

Specifically, in step S840, the donor CU corresponding to mIAB cell 1 802 may transmit a UE context request to the gNB corresponding to the stationary cell 801. In step S845, the donor CU corresponding to mIAB cell 1 802 may receive a UE context response from the gNB corresponding to the stationary cell 801.

In step S850, the donor CU corresponding to mIAB cell 1 802 may transmit a Xn-U address indication to the gNB corresponding to the stationary cell 801.

The donor CU corresponding mIAB cell 1 802 may transmit a path switch request to the AMF 803 entity in step S855, and the donor CU corresponding to mIAB cell 1 802 may receive a path switch request reponse from the AMF 803 entity in step S840.

In step S865, the donor CU corresponding to mIAB cell 1 802 may include a suspendConfig field into a RRCRelease message and instruct the UE to remain in the inactive mode. At this time, UL grant information, a TA value required for transmission through the UL grant, validity condition information of the TA, a timer value, a PCI of a target cell to be changed due to full migration of the mIAB node in the future, and/or DL carrier frequency information of the cell may be included in the RRCRelease message.

In step S870, mIAB cell 1 802 may transmit a UE context release message to the stationary cell 801. In step S875, inactive UE 1 800 may store information received through the RRCRelease message and initiate measurement of TA validation.

Further, the DU of the mIAB node should store/maintain the configured TA value and information on the UL grant. Thereafter, even when the mIAB node performs full migration to another donor CU therethrough, a new target cell may still receive UL traffic from the UE, based on the corresponding TA and UL grant.

According to an embodiment, in step S880, when full migration is performed to another donor node according to movement of the mIAB, RNA of the target cell may be changed and, when the RNA is a new RNA that is not the RNA configured in the UE, the UE may perform a RNA update (RNAU). According to an embodiment, inactive UE 1 800 may perform cell reselection in step S885.

At this time, in step S890, when a TA validation condition is satisfied, inactive UE 1 800 may use a TA value associated with the corresponding condition and transmit a RRCResumeRequest message to a new cell by using a UL grant associated with the corresponding condition. As described in step S895, the random access procedure may be omitted. As described in step S897, the RRCResumeRequest message may include a RNA update as a cause value. The mIAB node and the target donor CU receiving the RRCResumeRequest message may perform a RNAU procedure for a source donor.

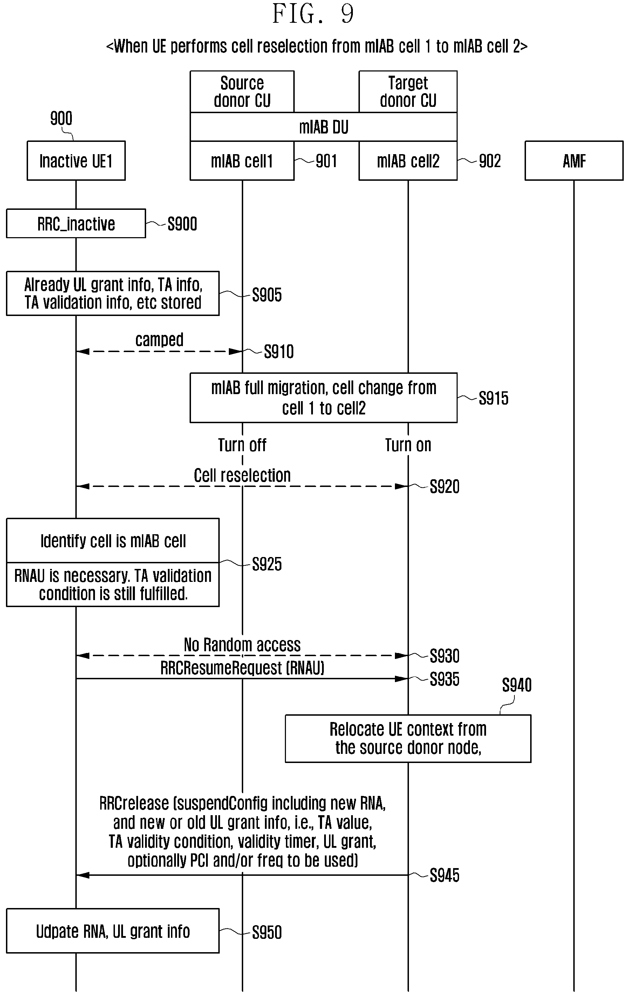

FIG. 9 is a sequence diagram illustrating a method by which a UE 900 performs cell reselection from mIAB cell 1 901 to mIAB cell 2 912 in an embodiment according to the disclosure.

In step S900, the UE 900 may be in an inactive state. In step S905, the UE 900 may already store at least one piece of UL grant information, TA information, TA validation information, or the like. In step S910, the UE 900 is camping on mIAB cell 1 901. Thereafter, in step S915, the mIAB performs full migration from the source donor to a target donor, and mIAB cell 1 901 may be turned off and mIAB cell 2 902 may be turned on. In step S920, the UE 900 may perform cell reselection with mIAB cell 2 902. Through system information transmitted by mIAB cell 2 902, the UE 900 may recognize that the reselected cell is the mIAB cell and the RNAU is required in S925.In this case, the UE 900 may assume that the UL grant for the RNAU has been already configured and, when associated TA validation is still effective, the UE 900 may include a RNAU cause value into the RRCResumeRequest message through the previously configured UL grant and transmit the RRCResumeRequest message to the network through mIAB cell 2 902. In this case, the UE may not perform random access in step S930.

The target donor node of the mIAB receiving the information may perform UE context retrieval from the existing source donor in step S940. Thereafter, in step S945, the network may transmit RNA information based on a new target donor to the UE 900. Further, the existing UL grant information or new UL grant information may be included and transmitted to the UE 900. The message may be a RRCrelease message (with suspendConfig). If preconfigured UL grant information is transmitted, absent is indicated without separate UL grant information or a separate UL grant information reuse indicator may be included.

The UE 900 receiving the corresponding message may update its own RNA information through the given information and may update or reuse UL grant configuration information in step S950.

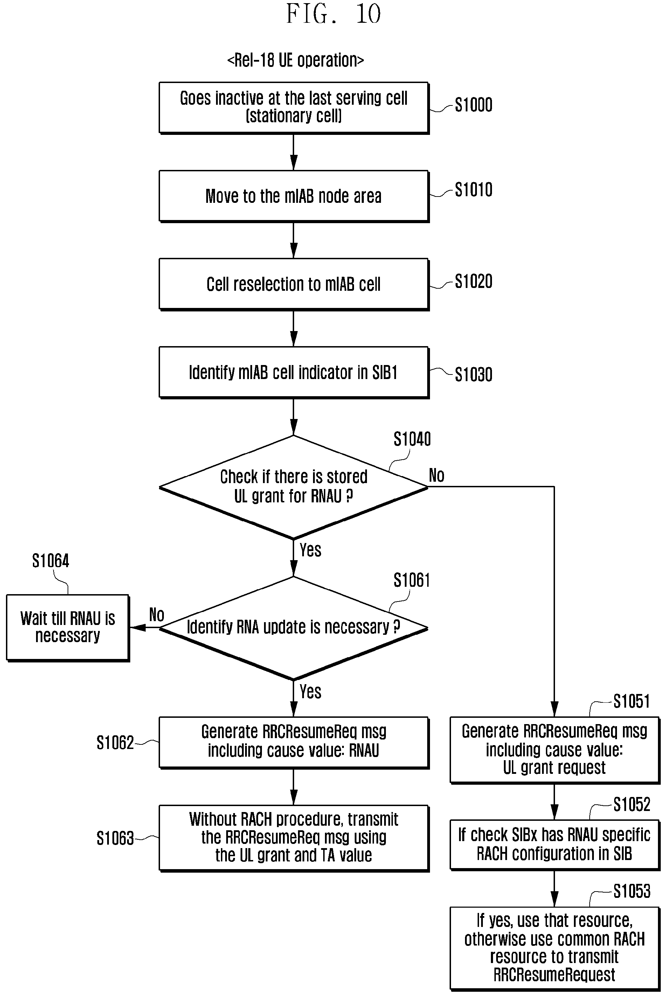

FIG. 10 is a flowchart illustrating an operation of the UE according to an embodiment of the disclosure.

In step S1000, the UE may transition to an inactive mode. For example, the UE may transition to the inactive mode in the last serving cell (stationary cell).

In step S1010, the UE may move to an area of the mIAB node. In step S1020, the UE may perform cell reselection to the mIAB cell.

For example, after transitioning to the inactive mode, the UE may move to the area of the mIAB node and perform cell reselection from the stationary cell to the mIAB cell. At this time, the reselection may be performed in consideration of the given frequency priority and ranking based on measurement of received power.

In step S1030, the UE may identify a mIAB cell indicator. For example, the UE may identify the mIAB cell indicator of the selected cell, based on system information (according to an embodiment, SIB 1).

In step S1040, the UE may identify whether a UL grant for a RNAU is preconfigured/stored in the current mIAB cell.

When the UL grant for the RNAU is not stored based on the determination result of step S1040, the UE may make a UL grant request. At this time, the UE may include a UL grant request indicator into a RRCResumeRequest message as a cause value in S1051. The UE may acquire a UL grant and a TA through a RACH and transmit a message, based on the acquired information. At this time, when a RNAU-specific RACH configuration is broadcasted to the corresponding serving cell in S1052, the UE may transmit a RACH preamble by using corresponding resources, and otherwise, may transmit a RACH preamble by using contention-based common RACH resources in S1053.

If there is the preconfigured UL grant/TA value, based on the determination result of step S1040, the UE may identify whether a RNA update is needed in step S1061. When the RNA update is needed, the UE may generate the RRCResumeRequest message and include the RNAU into the RRCResumerequest message as the cause value in step S1062. In step S1063, the UE may transmit the generated message to the serving cell by using the pregiven UL grant/TA without any RACH procedure. Meanwhile, when the RNA update is not needed based on the determination result of step S1061, the UE may wait until the RNAU is needed in step S1064.

Methods according to embodiments stated in the claims or specifications of the disclosure may be implemented in hardware, software, or a combination of hardware and software.

In the implementation of software, a computer-readable storage medium for storing one or more programs (software modules) may be provided. The one or more programs stored in the computer-readable storage medium may be configured for execution by one or more processors within the electronic device. The one or more programs may include instructions for allowing the electronic device to perform methods according to embodiments stated in the claims or specifications of the disclosure.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, the programs may be stored in a memory configured by a combination of some or all of the listed components. Further, the number of configured memories may be plural.

In addition, the programs may be stored in an attachable storage device which may access the electronic device through communication networks such as the Internet, an Intranet, a local area network (LAN), wide LAN (WLAN), and a storage area network (SAN) or a combination thereof. The storage device may access a device implementing embodiments of the disclosure through an external port. Further, a separate storage device in a communication network may access the device implementing embodiments of the disclosure.

In the above-described detailed embodiments of the disclosure, the number of components included in the disclosure is expressed in the singular or the plural according to the presented detailed embodiment. However, the singular form or plural form is selected for suitability of description of the presented situation for convenience of description, and the disclosure is not limited to a single element or multiple elements thereof. Further, either multiple elements expressed in the description may be configured into a single element, or a single element in the description may be configured into multiple elements.

Meanwhile, although the concrete embodiments of the disclosure have been described in the detailed description of the disclosure, various modifications can be made without departing from the scope of the disclosure. Therefore, the scope of the disclosure should not be defined as being limited to the embodiments, but should be defined by the appended claims and equivalents thereof.

## Claims

1. A method performed by a terminal in a wireless communication system, the method comprising:
identifying that a cell for which cell reselection has been performed is a mobile integrated access/backhaul (mIAB) cell, based on the cell reselection;
identifying whether an uplink (UL) grant for a radio access network (RAN)-based notification area update (RNAU) is stored; and
transmitting, to the mIAB cell, a radio resource control (RRC) resume request message comprising information requesting for the UL grant in case that the UL grant for the RNAU is not stored.

2. The method of claim 1, further comprising receiving, from the mIAB cell, a RRC release message comprising at least one of information on the UL grant and information on a timing advance (TA) value based on transmission of the RRC resume request message.

3. The method of claim 2, further comprising:
storing at least one of the information on the UL grant and the information on the TA value included in the RRC release message;
performing cell reselection to another mIAB cell, based on full migration of a mIAB node;
identifying that the cell for which the cell reselection has been performed is the mIAB cell;
determining to perform the RNAU, based on the identification; and
transmitting the RRC resume request message to the another mIAB cell, based on at least one of the information on the UL grant and the information on the TA value.

4. The method of claim 2, wherein the RRC release message further comprises information on a TA validity condition, and
wherein, in case that cell reselection to another mIAB cell is performed based on full migration of a mIAB node, the RRC resume request message is transmitted to the another mIAB cell, based on whether the TA validity condition is satisfied.

5. A method performed by a mobile integrated access/backhaul (mIAB) distributed unit (DU) entity in a wireless communication system, the method comprising:
receiving a radio resource control (RRC) resume request message comprising information making a request for an uplink (UL) grant for a radio access network (RAN)-based notification area update (RNAU) from a terminal performing cell reselection for a first mIAB cell corresponding to the mIAB DU entity; and
transmitting a RRC release message comprising at least one of information on the UL grant and information on a timing advance (TA) value from the first mIAB cell, based on transmission of the RRC resume request message.

6. The method of claim 5, wherein the RRC release message is received in case that a cell for which the cell reselection has been performed by the terminal is identified a mIAB cell and the UL grant for the RNAU is not stored in the terminal.

7. The method of claim 5, further comprising:
turning off the first mIAB cell corresponding to the mIAB DU entity and turning on a second mIAB cell corresponding to the mIAB DU entity, based on full migration of a mIAB node; and
receiving the RRC resume request message through the second mIAB cell, based on at least one of the information on the UL grant and the information on the TA value in case that cell reselection to the second mIAB cell is performed by the terminal.

8. A terminal in a wireless communication system, the terminal comprising:
a transceiver; and
a controller configured to perform control to:
identify that a cell for which cell reselection has been performed is a mobile integrated access/backhaul (mIAB) cell, based on the cell reselection;
identify whether an uplink (UL) grant for a radio access network (RAN)-based notification area update (RNAU) is stored; and
transmit, to the mIAB cell via the transceiver, a radio resource control (RRC) resume request message comprising information requesting for the UL grant in case that the UL grant for the RNAU is not stored.

9. The terminal of claim 8, wherein the controller is configured to perform control to receive, from the mIAB cell via the transceiver, a RRC release message comprising at least one of information on the UL grant and information on a timing advance (TA) value, based on transmission of the RRC resume request message.

10. The terminal of claim 9, wherein the controller is configured to perform control to:
store at least one of the information on the UL grant and the information on the TA value included in the RRC release message;
perform cell reselection to another mIAB cell, based on full migration of a mIAB node;
identify that the cell for which the cell reselection has been performed is the mIAB cell;
determine to perform the RNAU, based on the identification; and
transmit, via the transceiver, the RRC resume request message to the another mIAB cell, based on at least one of the information on the UL grant and the information on the TA value.

11. The terminal of claim 9, wherein the RRC release message further comprises information on a TA validity condition, and
wherein, in case that cell reselection to another mIAB cell is performed based on full migration of a mIAB node, the RRC resume request message is transmitted to the another mIAB cell, based on whether the TA validity condition is satisfied.

12. A mobile integrated access/backhaul (mIAB) distributed unit (DU) entity in a wireless communication system, the mIAB DU entity comprising:
a transceiver; and
a controller configured to perform control to:
receive, through the transceiver, a radio resource control (RRC) resume request message comprising information making a request for an uplink (UL) grant for a radio access network (RAN)-based notification area update (RNAU) from a terminal performing cell reselection for a first mIAB cell corresponding to the mIAB DU entity; and
transmit, through the transceiver, a RRC release message comprising at least one of information on the UL grant and information on a timing advance (TA) value from the first mIAB cell, based on transmission of the RRC resume request message.

13. The mIAB DU entity of claim 12, wherein the RRC release message is received in case that a cell for which the cell reselection has been performed by the terminal is identified a mIAB cell and the UL grant for the RNAU is not stored in the terminal.

14. The mIAB DU entity of claim 12, wherein the controller is configured to perform control to:
turn off the first mIAB cell corresponding to the mIAB DU entity and turn on a second mIAB cell corresponding to the mIAB DU entity, based on full migration of a mIAB node; and
receive, through the transceiver, the RRC resume request message through the second mIAB cell, based on at least one of the information on the UL grant and the information on the TA value in case that cell reselection to the second mIAB cell is performed by the terminal.

15. The mIAB DU entity of claim 14, wherein the RRC release message further comprises information on a TA validity condition, and
wherein, in case that the cell reselection to the second mIAB cell is performed by the terminal, the RRC resume request message is received by the second mIAB cell, based on whether the TA validity condition is satisfied.
